# EUROPEAN PATENT SPECIFICATION

(11) **EP 3 188 864 B1**
(45) Date of publication and mention of the grant of the patent: **06.11.2024**
(21) Application number: 15838020.4
(22) Date of filing: 03.09.2015
(51) Int. Cl.: B23B 37/00, B23B 31/02, B23B 31/08

(54) **DEVICES FOR ISOLATING ACOUSTIC VIBRATIONS IN METALWORKING SYSTEMS**
VORRICHTUNGEN ZUR ISOLIERUNG VON AKUSTISCHEN SCHWINGUNGEN IN METALLBEARBEITUNGSSYSTEMEN
DISPOSITIFS POUR ISOLER DES VIBRATIONS ACOUSTIQUES DANS DES SYSTÈMES DE TRAVAIL DES MÉTAUX

(30) Priority: 05.09.2014 US 201462046248 P
(43) Date of publication of application: 12.07.2017
(73) Proprietor: Edison Welding Institute, Inc., Columbus, OH 43221 (US)
(72) Inventor: SHORT, Matthew A., Wilmington, OH 45177 (US); GRAFF, Karl F., Hilliard, OH 43026 (US)
(74) Representative: Mewburn Ellis LLP
(86) International application number: PCT/US2015/048379
(87) International publication number: WO 2016/036965

(56) References cited:
- EP-A1- 1 439 320
- WO-A1-2009/101987
- WO-A1-2014/017460
- CN-U- 202 418 386
- US-A- 3 930 173
- US-A1- 2006 229 132
- US-A1- 2008 041 604
- US-A1- 2009 066 192
- US-A1- 2011 222 975
- US-A1- 2011 222 975
- US-A1- 2013 014 592

## Description

### CROSS-REFERENCE TO RELATED APPLICATIONS

This patent application claims the benefit of U.S. Provisional Patent Application Serial No. 62/046,248 filed on filed on September 05, 2014 and entitled "Devices for Isolating Acoustic Vibrations in Metalworking Systems".

### BACKGROUND OF THE INVENTION

US 2011/222975 A1 describes a device according to the preamble of claim 1 for use in a machining system.

The described invention relates generally to systems for machining metals and other materials and more specifically to a system for machining metals and other materials into which an ultrasonic machining module has been incorporated, wherein the ultrasonic machining module is compatible with a variety of existing machining systems, devices, and processes due to its vibration-isolating characteristics.

Machining, which is a collective term for drilling, milling, reaming, tapping, and turning, is an enabling technology that impacts virtually all aspects of manufacturing in the United States and elsewhere in the world. In a specific example, a milling machine is a machining tool used to machine solid materials. Milling machines are typically classified as either horizontal or vertical, which refers to the orientation of the main spindle. Both types range in size from small, bench-mounted devices to much larger machines suitable for industrial purposes. Unlike a drill press, which holds the workpiece stationary as the drill moves axially to penetrate the material, milling machines move the workpiece axially and radially against the rotating milling cutter, which cuts on its sides as well as its tip. Milling machines are used to perform a vast number of operations, from simple tasks (e.g., slot and keyway cutting, planing, drilling) to complex tasks (e.g., contouring, diesinking).

Cutting and drilling tools and accessories used with machining systems (including milling machines) are often referred to in the aggregate as "tooling". Milling machines often use CAT or HSK tooling. CAT tooling, sometimes called V-Flange tooling, is the oldest and probably most common type used in the United States. CAT tooling was invented by Caterpillar Inc. of Peoria, Illinois, to standardize the tooling used on Caterpillar machinery. HSK tooling, sometimes called "hollow shank tooling", is much more common in Europe where it was invented than it is in the United States. The holding mechanism for HSK tooling is placed within the hollow body of the tool and, as spindle speed increases, it expands, gripping the tool more tightly with increasing spindle speed.

Improving the machinability of certain materials is of significant interest to manufacturers of military equipment and certain commercial hardware, as well as to the builders of machine tools. More specifically, very advanced materials such as armor plates and composites are notoriously difficult to machine with standard systems and methods. High-speed systems and ultra-hard tool bits are used for such material, but provide only a marginal increase in tool life and productivity. Significant improvements in the machinability of materials have been achieved by implementing advanced technologies such as laser, waterjet, and EDM cutting. However, these processes are high in capital cost, limited in application, and differ too much to be used in standard machine shops. Also, the application of these processes is limited to certain types of cuts in the materials on which they are typically used.

Ultrasonic-assisted machining was developed in the United States in the 1950's and was used for machining materials that were considered to be difficult to machine at the time. The more modem process of ultrasonic machining (UM) involves the application of high power ultrasonic vibrations to "traditional" machining processes (e.g., drilling, turning, milling) for improving overall performance in terms of faster drilling, effective drilling of hard materials, increased tool life, and increased accuracy. This is typically accomplished by using drill bits manufactured from high speed steel (HSS), carbide, cobalt, polycrystalline diamond composite, or other suitable materials affixed to a collet (e.g., shrink fit, compression, hydraulic, or mechanical) that is affixed to an ultrasonic (US) transmission line. In this context, UM is not the existing ultrasonic-based slurry drilling process (i.e., impact machining) used for cutting extremely hard materials such as glass, ceramics, quartz. Rather, this type of UM concerns methods for applying high power ultrasonics to drills, mills, reamers, taps, turning tools, and other tools that are used with modern machining systems.

Although the use of ultrasonics with modern machining systems provides significant and numerous benefits, there are certain technical challenges involved, not the least of which is the incorporation of ultrasonic energy into machining systems that were not originally designed to accommodate this type of energy output. Thus, there is an ongoing need for an ultrasonic machining module that is compatible with and that may be incorporated into existing machining systems without damaging or negatively impacting the performance of such systems.

### SUMMARY OF THE INVENTION

The following provides a summary of certain exemplary embodiments of the present invention. This summary is not an extensive overview and is not intended to identify key or critical aspects or elements of the present invention or to delineate its scope.

In accordance with one aspect of the present invention, a first device for use in a machining system is defined in claim 1.

Additional features and aspects of the present invention will become apparent to those of ordinary skill in the art upon reading and understanding the following detailed description of the exemplary embodiments. As will be appreciated by the skilled artisan, further embodiments of the invention are possible without departing from the scope of the invention. Accordingly, the drawings and associated descriptions are to be regarded as illustrative and not restrictive in nature.

### BRIEF DESCRIPTION OF THE DRAWINGS

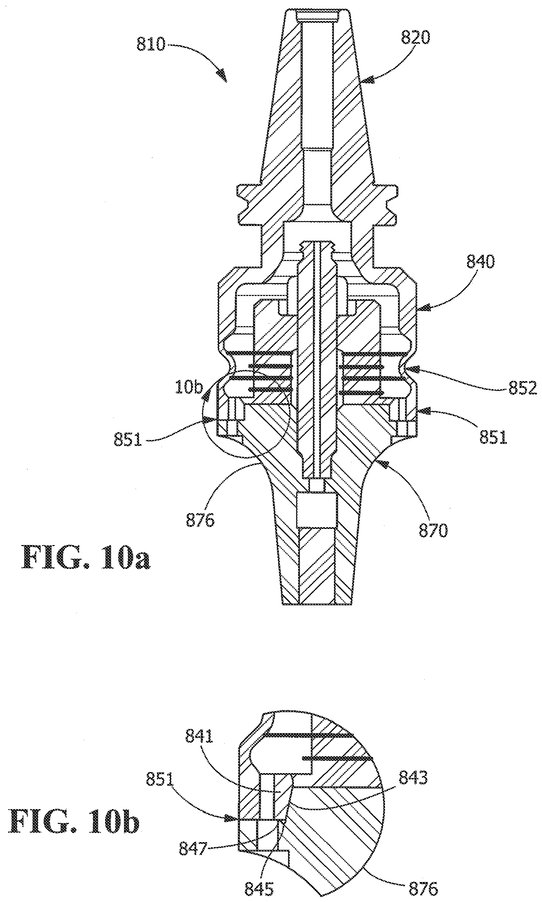

Figures 10a and 10b, which are incorporated into and form a part of the specification, schematically illustrate one or more exemplary embodiments of the invention and, together with the general description given above and detailed description given below, serve to explain the principles of the invention, and wherein:
FIG. 1 is a side view of an ultrasonic machining module;
FIG. 2 is a cross-sectional view of the ultrasonic machining module of FIG. 1;
FIG. 3 is a cross-sectional side view of an ultrasonic machining, showing a first alternate embodiment of the housing component thereof;
FIG. 4 is a cross-sectional side view of an ultrasonic machining module, showing a second alternate embodiment of the housing component thereof;
FIG. 5 is a cross-sectional side view of an ultrasonic machining module, showing a third alternate embodiment of the housing component thereof;
FIG. 6 is a cross-sectional side view of an ultrasonic machining module, showing a fourth alternate embodiment of the housing component thereof;
FIG. 7 is a side view of an ultrasonic machining module, showing a fifth alternate embodiment of the housing component thereof;
FIG. 8 is a side view of an ultrasonic machining, showing a sixth alternate embodiment of the housing component thereof;
FIGS. 9a-b are cross-sectional side views of an ultrasonic machining module, showing a flexible spring-like structure located at the nodal position of the transducer component thereof; and
FIGS. 10a-b are cross-sectional side views of an ultrasonic machining module in accordance with the present invention, wherein the transducer component thereof includes precision geometry that acts as an alignment boss, and wherein the alignment boss is positioned at the nodal position of the transducer.

### DETAILED DESCRIPTION OF THE INVENTION

Exemplary embodiments of the present invention are now described with reference to the Figures. Although the following detailed description contains many specifics for purposes of illustration, a person of ordinary skill in the art will appreciate that many variations and alterations to the following details are within the scope of the invention. Accordingly, the following embodiments of the invention are set forth without any loss of generality to, and without imposing limitations upon, the claimed invention.

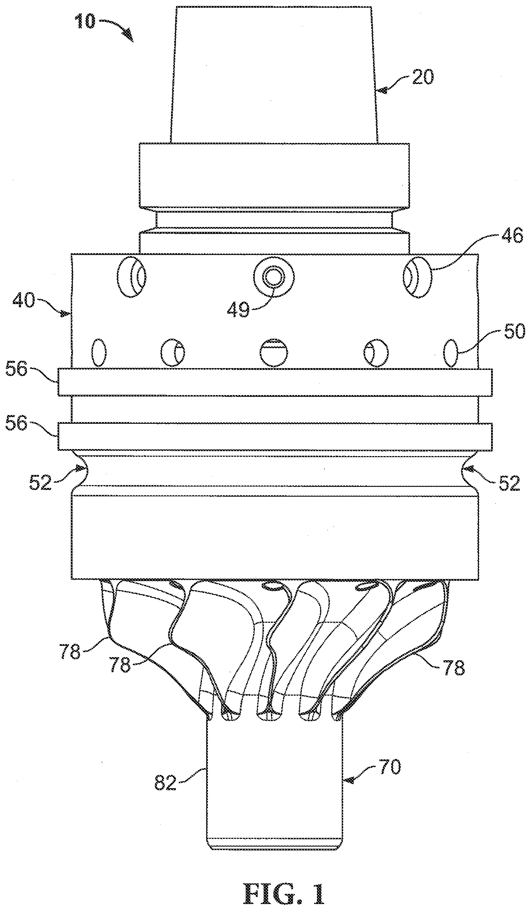

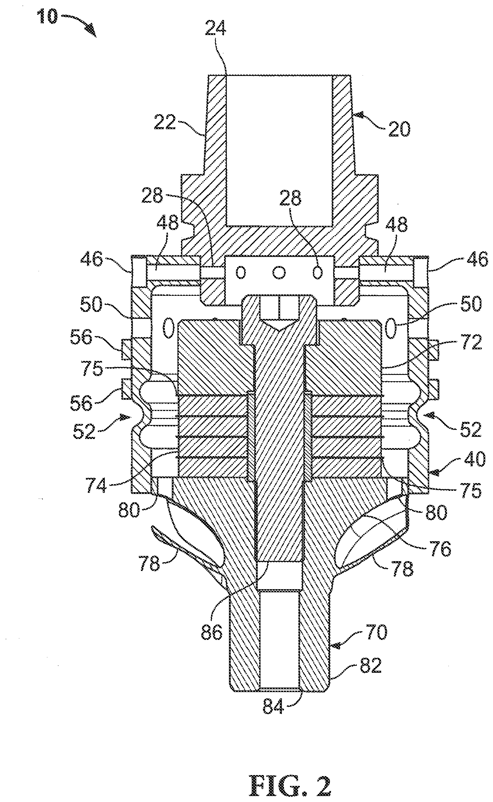

With reference to FIGS. 1-2, a first exemplary embodiment provides an ultrasonic machining module for use in a machining system, wherein the ultrasonic machining module includes: (a) an ultrasonic transducer, wherein the ultrasonic transducer is adapted to receive a tool bit, and wherein the ultrasonic transducer further comprises: (i) a front mass; (ii) a back mass; (iii) a plurality of piezoelectric ceramics positioned between the front mass and back mass; (iv) at least one electrical connector; and (v) a bolt passing through the front mass, back mass, and ceramics, wherein the bolt is operative to apply compressive force to the ceramics; and (b) a vibration-isolating housing adapted to be both compatible with a machining system and to receive the ultrasonic transducer therein. The housing further includes a spring-like feature formed radially therein above the front mass, wherein the spring-like feature further includes a curved and thinned section of the housing, and wherein the curved and thinned section of the housing is operative to permit flexion in the housing for isolating all vibrations generated by the ultrasonic transducer when the device is in operation except axial vibrations transmitted to the tool bit, thereby preventing unwanted vibrations from traveling backward or upward into the machining system and potentially causing damage to the system or other problems. This particular embodiment is disclosed in U.S. Patent Application No. 13/046,099 (now U.S. Patent No. 8,870,500).

With reference to FIGS. 1-2, an exemplary embodiment of ultrasonic machining module 10 includes three basic components: tool holder 20, housing 40, and ultrasonic transducer assembly 70. Tool holder 20 includes upper portion 22, which further includes primary bore 24 formed therein for attaching machining module 10 to the main spindle (e.g., CAT 40, 60 or HSK) of a machining system (not shown). Lower portion 26 of tool holder 20 includes a plurality of secondary bores 28 that cooperate with similar structures in housing 40 to mechanically couple tool holder 20 to housing 40 using connectors 49 (i.e., centering bolts). In some embodiments of the present invention, tool holder 20 is shrink-fit to housing 20 in addition to or instead of being bolted thereto.

Housing 40 includes a rigid cylindrical body 42 that further includes a centrally located aperture 44 that is adapted to receive tool holder 20, and a bottom opening 54, into which ultrasonic transducer assembly 70 is inserted. Circumferential electrical contacts 56 (i.e., slip rings) are positioned on the exterior of housing 40. As will be appreciated by the skilled artisan, the use of other types of electrical contacts is possible. For example, a single contact 56 may be utilized or the contacts may extend through the spindle of the machining system, while still providing or maintaining the flow of cooling air through the spindle. The top or upper portion of housing 40 includes a plurality of apertures 46 that connect to a plurality of bores 48 that correspond to the placement of bores 28 in tool holder 20 when machining module 10 is assembled. A series of connectors 49 are inserted into bores 48 and 28 for the purpose of bolting tool holder 20 to housing 40. A plurality of air outlets 50 is formed in housing 20. As described in greater detail below, air outlets 50 cooperate with specific structures on ultrasonic transducer assembly 70 to cool machining module 10 when in use, thereby reducing or eliminating the need for any separate or external system or apparatus for cooling piezoelectric ceramics 74.

Housing 40 also includes circumferential region 52, which acts as a vibration isolating spring, and as such is characterized as a "spring-like structure". In the exemplary embodiment, region 52 includes a contoured and thinned section of the material from which housing 40 is manufactured. When machining module 10 is in use, region 52 permits a degree of flexion in housing 40, thereby absorbing and/or isolating acoustic energy generated by ultrasonic transducer assembly 70 and preventing unwanted vibration from traveling backward or upward into the spindle or other mechanical components of the machining system. Axial vibration generated by ultrasonic transducer assembly 70 is not diminished by region 52; therefore, torque is still delivered to the tool bit or other item that is attached to front mass 76 and that is being used to machine a workpiece. The term "tool bit" should be understood to mean drill bit or any other item that is attached to front mass 76. Essentially, region 52 is operative to absorb and/or isolate most or all vibrational modes except the axial vibrations directed toward the workpiece.

Ultrasonic transducer assembly 70 includes back mass 72, front mass 76, and a plurality of piezoelectric ceramics 74 positioned between these two structures. A plurality of electrodes 75 are sandwiched between piezoelectric ceramics 74, and bolt 86 passes through back mass 72, ceramics 74, electrodes 75 and a portion of front mass 76. When tightened, bolt 86 is operative to apply compressive force to piezoelectric ceramics 74. Although not shown in the Figures, a series of electrical lead wires are typically attached to at least one of the electrodes 75. These wires exit the interior of housing 40 either through housing 40 or though tool holder 20 where they then connect to circumferential electrical contacts 56. Brush contacts or other types of electrical contacts may be used to provide electricity to machining module 10. Transducer assembly 70 typically operates at power levels ranging from 1 kW-5 kW and amplitudes ranging from 25 µm to 150 µm.

In the exemplary embodiment of ultrasonic machining module 10 shown in FIGS. 1-2, ultrasonic transducer assembly 70 further includes a plurality of cooling members, fins or vanes 78 that are located circumferentially around front mass 76 just beneath a plurality of air inlets 80 that are also formed in front mass 76. When ultrasonic machining module 10 rotates, vanes 78, which simulate a compressor wheel, are operative to draw air upward and through air inlets 80. Air then flows through the interior of housing 40 across ceramics 74 for cooling purposes, and exits housing 40 though air outlets 50. As shown in the Figures, the front or bottom area of front mass 76 includes a tapered collet 82 that further includes bore 84, which is adapted to receive a drill bit, milling tool, or other item. As will be appreciated by the skilled artisan, a drill bit or other item (not shown) may be attached to collet 82 using the process known as shrink-fitting. By heating the mass around bore 84 uniformly, it is possible to significantly expand the diameter of the bore. The shaft of a drill bit or other item is then inserted into the expanded bore. Upon cooling, the mass around the bore shrinks back to its original diameter and frictional forces create a highly effective joint. In an exemplary embodiment, the bottom edge of housing 40 is attached to the top portion of front mass 76 using a shrink-fit process for facilitating removal of case 40 for repairing ultrasonic machining module 10. As will be appreciated by the skilled artisan, other means of attaching tooling items to front mass 76 and/or attaching housing 40 to transducer assembly 70 are possible and are compatible with the present invention.

Some or all of the metal components of ultrasonic machining module 10 are typically manufactured from A2 tool steel. Alternately, D2, SS, 4140, and/or 350-M tool steel may be used. Regardless of the material used, front mass 76 and back mass 72 may both be manufactured from the same material as a means for reducing amplitude. In general terms, mixing of the mass of these components adjusts amplitude. In the exemplary embodiment shown in FIGS. 1-2, total module length is about 7.5 inches (19.1 cm). However, the present embodiment is scalable and miniaturized variants of ultrasonic machining module 10 are compatible with medical and surgical systems and devices, among other applications.

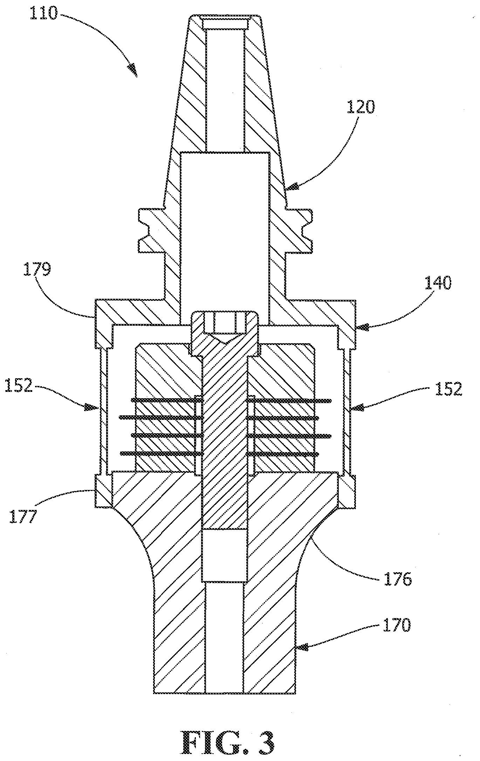

With reference to FIGS. 3-8, this example provides additional structures (beyond circular geometric reliefs formed in the housing wall) that act as a flexural member. The present example provides various alternate acoustic isolation features which substantially eliminate vibrations being passed back into the machine spindle/structure from the ultrasonic system, or passed from the machine to the tool tip. The novel aspects of these embodiments include: (i) the use of various geometrical features to aid in the isolation of ultrasonic energy; (ii) the use of secondary materials to dampen mechanical vibrations from the case/housing; (iii) the design of an acoustic isolation feature which is sufficient for applying machining forces while flexing in a manner which eliminates the transmission of vibrations back into the machine spindle/structure; and (iv) the design and incorporation of specialty geometry to enhance secondary motion such as torsional excitations.

FIG. 3 is a cross-sectional side view of an ultrasonic machining module 110, showing a first alternate housing component 140, which is disposed between tool holder 120 and ultrasonic transducer assembly 170. This embodiment isolates vibrations created by ultrasonic excitation within ultrasonic machining module 110 by using a thin-walled structure 152 which is intended to flex or vibrate along with the ultrasonic excitation. This embodiment includes a first rigid body 177 affixed to the nodal position of transducer front mass 176 to rigidly couple the two bodies, thereby transmitting acoustical energy. Moving upward, the walls of housing 140 are reduced in thickness from the nodal rigid body, which is then intended to flex or vibrate accordingly. The upper most portion of housing 140 then increases in thickness arriving at a second rigid mass 179, which is integrated with conventional tool holder 120. This approach rigidly supports ultrasonic machining module 110, thereby isolating unwanted vibrations to housing 140.

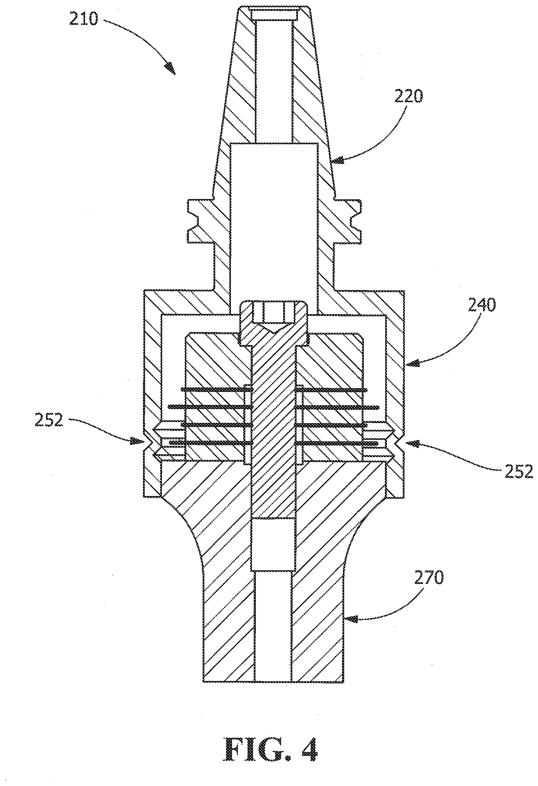

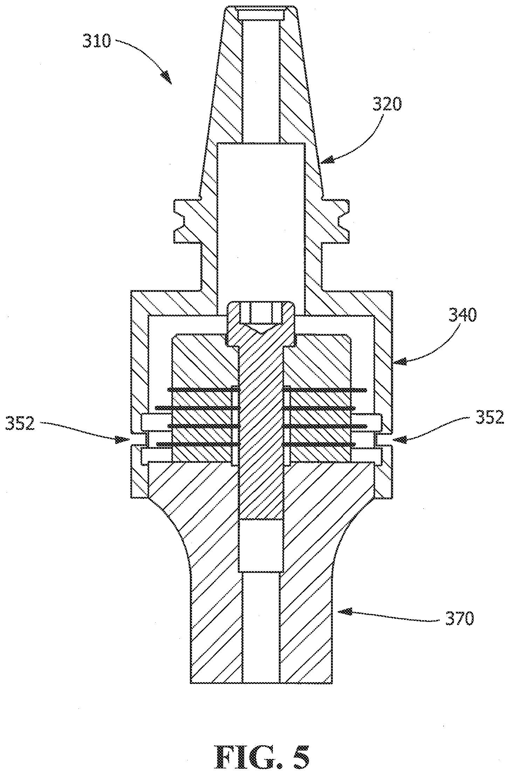

FIG. 4 is a cross-sectional side view of an ultrasonic machining module 210, showing a second alternate housing component 240, which is disposed between tool holder 220 and ultrasonic transducer assembly 270. In this embodiment, housing 240 includes vibration isolating region 252, wherein rather than employing circular or round features within the walls of housing 240, triangular geometric reliefs have been added. Similarly, FIG. 5 is a cross-sectional side view of an ultrasonic machining module 310, showing a third alternate housing component 340, which is disposed between tool holder 320 and ultrasonic transducer assembly 370. In this embodiment, housing 340 includes vibration isolating region 352, wherein rather than employing circular or round features within the walls of housing 340, rectangular geometric reliefs have been added.

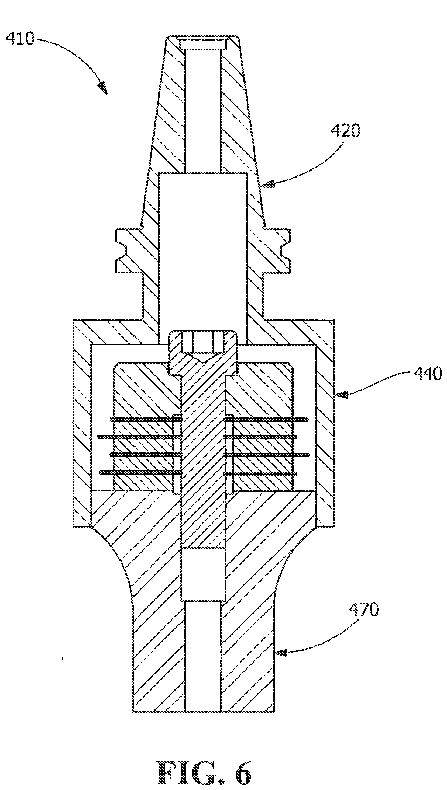

FIG. 6 is a cross-sectional side view of an ultrasonic machining module 410, showing a fourth alternate housing component 440, which is disposed between tool holder 420 and ultrasonic transducer assembly 470. This embodiment incorporates no discernable reliefs or isolation features into housing 440, but rather modifies the walls of housing 440 to be a λ/4 wavelength system in which the housing walls are put into resonance with ultrasonic machining module 410. Arriving at the λ/4 wavelength involves a predetermined wall length for housing 440, which is based on operating frequency. For example, a 20kHz resonator would utilize a housing wall length of approximately 2.63 inches

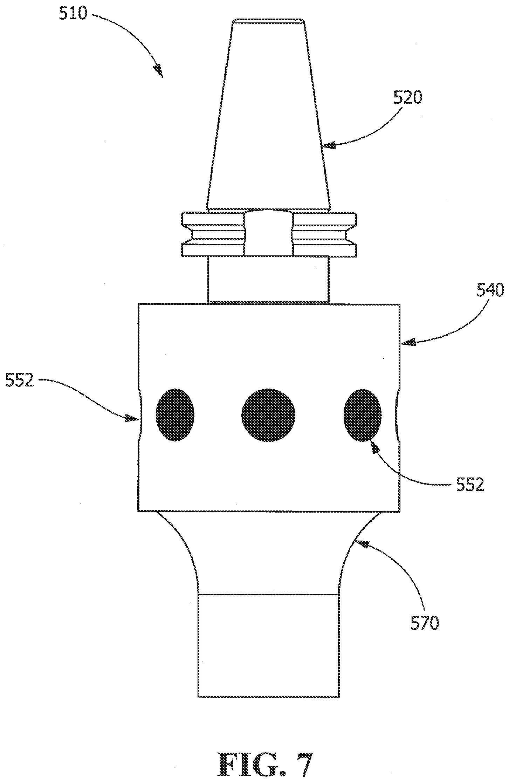

FIG. 7 is a side view of an ultrasonic machining module 510, showing a fifth alternate housing component 540, which is disposed between tool holder 520 and ultrasonic transducer assembly 570. This embodiment provides a rigid housing 540 that includes vibration dampening features 552 incorporated directly therein. Vibration dampening features 552 are essentially cutouts formed in the walls of housing 540, and these cutouts may be backfilled with vibration dampening materials such as, for example, rubber, elastomer, alloys such as tin or Inconel, and/or other suitable materials. Vibration dampening features 552 may be circles, squares, rectangles, triangles, ellipses, or combinations thereof, and a variety of other geometries are also possible.

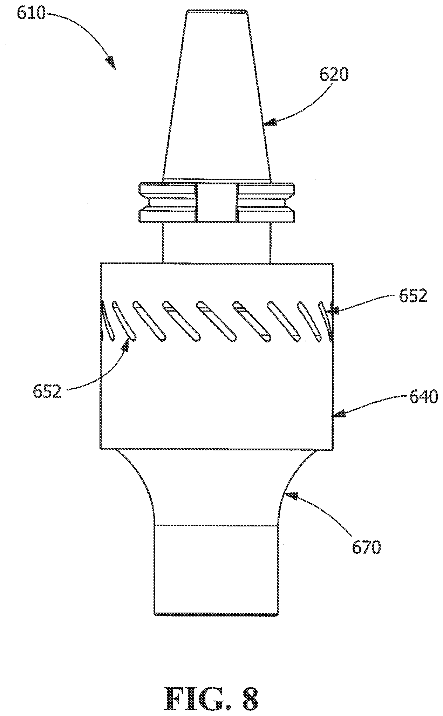

FIG. 8 is a side view of an ultrasonic machining module 610, showing a sixth alternate housing component 640, which is disposed between tool holder 620 and ultrasonic transducer assembly 670. This embodiment also includes cutouts or features 652 formed in housing 640 that have a specific geometry that prevents acoustical energy from potentially being transmitted back into the machine tool. In this embodiment, while the specific geometry does isolate vibrations, the cutouts also enhance the vibration produced at the tip of a tool being used with ultrasonic machining module 610. For example, it is possible to increase the amount of torsional displacement that is present at the tool tip beyond what is produced by the longitudinal displacement when driven by an ultrasonic wave. This in turn creates a mixed mode device, which when driven by a longitudinal mode, longitudinal excitation flexes the cutouts and then drives the entire body in a torsional manner. An example of this is shown in FIG. 8, wherein slot diameter, length, angle, and direction will dictate the amount of torsional displacement.

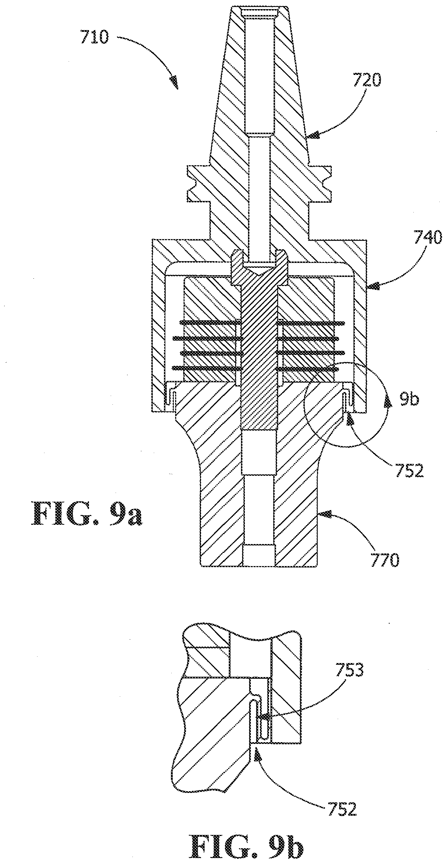

FIGS. 9a-b are cross-sectional side views of ultrasonic machining module 710, showing vibration isolating feature 752, which includes flexible spring-like structure 753 located at the nodal position of transducer 770, which is located beneath housing 740 and tool holder 720. While spring-like structure 753 does exhibit flexion that is adequate for isolating unwanted vibration generated by transducer 770, spring-like structure 753 does retain enough rigidity for withstanding axial and side loads when subjected to machining operations. In this embodiment, flexible spring-like structure 753 is capable of vibrating both axially and radially. However, under forces in excess of 500 pounds, ultrasonic machining module 710 must not be capable of deforming, moving, or being displaced by the resultant force. Furthermore, the system must not dampen the vibrations when subjected to said loads. The embodiments depicted by FIGS. 3-8 are not encompassed by the appended claims.

FIGS. 10a-b are cross-sectional side views of an ultrasonic machining module 810 in accordance with the present invention, wherein ultrasonic transducer assembly 870 includes precision geometry that acts as an alignment boss 843 that is positioned at nodal position 851 of front mass 876. As with other embodiments disclosed herein, this embodiment of the present invention includes an ultrasonic transducer assembly 870 that is joined with tool holder 820 and housing 840. This embodiment also includes specific geometric features for providing precision alignment of the tool axis, sealing of ultrasonic machining module 810, and vibration control. This precise geometry also acts as an internal sealing system in which a tapered or conical flange 841, which is formed in housing 840, is stretched within its elastic limits over a tapered or conical alignment boss 843, thereby creating a seal against horizontal base 847, which is formed on ultrasonic transducer assembly 870. A small groove 854 formed in horizontal base 847 acts as an O-ring groove for providing additional sealing. Alignment boss 843 is located specifically at the λ/4 nodal position (the point of maximum radial displacement) in a λ/2 resonator for preventing horizontal base 847 from driving in a shear, bending, and/or axial mode; thereby maintaining the vibration-isolating properties of housing 840 and region 852.

While the present invention has been illustrated by the description of exemplary embodiments thereof, and while the embodiments have been described in certain detail, there is no intention to restrict or in any way limit the scope of the appended claims to such detail. Additional advantages and modifications will readily appear to those skilled in the art.

## Claims

1. A device (810) for use in a machining system, comprising:
(a) an ultrasonic transducer assembly (870) having a known nodal position (851), wherein the ultrasonic transducer assembly (870) is adapted to receive a machining tool, and
(b) a vibration-isolating housing (840) adapted to be both compatible with a machining system and to receive the ultrasonic transducer assembly (870) therein, wherein the housing (840) further includes a circumferential region (852) with a contoured and thinned section from which the housing (840) is formed for isolating all vibrations generated by the ultrasonic transducer assembly (870) when the device (810) is in operation except axial vibrations transmitted to the machining tool, thereby preventing unwanted vibration from traveling backward or upward into the machining system;
**characterized in that** the device (810) further includes:
(a) a conical alignment boss (843) formed in the transducer (870) at the nodal position (851) thereof;
(b) a conical flange (841) formed in the housing (840), wherein the conical flange (841) is stretched within its elastic limits over the conical alignment boss (843) thereby sealing the housing (840) against a horizontal base (847) formed on the transducer (870); and
(c) a groove (854) formed in the horizontal base (847) on the transducer (470) for receiving an O-ring, wherein the O-ring provides additional sealing properties to the device (810).

2. The device (810) of claim 1, further comprising a tool holder (820), wherein the tool holder (820) and the top portion of the housing (840) are mechanically coupled to one another or are integrated with one another.

3. The device of any of claims 1 or 2, wherein the ultrasonic transducer assembly (870) further comprises: a front mass (876); a back mass; a plurality of piezoelectric ceramics positioned between the front mass and the back mass; at least one source of electricity connected to the piezoelectric ceramics; and a compression member passing through the front mass, back mass, and ceramics, wherein the compression member is operative to apply compressive force to the ceramics.

4. The device of any of claims 1 or 2, wherein the ultrasonic transducer assembly (870) further includes a modified collet adapted to receive the machining tool.

5. The device of any of claims 1 or 2, wherein the ultrasonic transducer assembly (870) further includes further includes at least one electrical connector.

6. The device of any of claims 1 or 2, wherein the circumferential region (852) includes triangular geometric reliefs formed in the housing at one or more predetermined locations.

## Patentansprüche

1. Vorrichtung (810) zur Verwendung in einem maschinellen Bearbeitungssystem, Folgendes umfassend:
(a) eine Ultraschallwandleranordnung (870) mit einer bekannten Knotenposition (851), wobei die Ultraschallwandleranordnung (870) geeignet ist, um ein maschinelles Bearbeitungswerkzeug aufzunehmen, und
(b) ein Schwingungsisolationsgehäuse (840), das geeignet ist, um sowohl mit einem maschinellen Bearbeitungssystem kompatibel zu sein als auch die Ultraschallwandleranordnung (870) in diesem aufzunehmen, wobei das Gehäuse (840) ferner einen Umfangsbereich (852) mit einem konturierten und ausgedünnten Abschnitt umfasst, von dem aus das Gehäuse (840) ausgebildet ist, um alle durch die Ultraschallwandleranordnung (870), wenn die Vorrichtung (810) in Betrieb ist, erzeugten Schwingungen zu isolieren, mit Ausnahme von axialen Schwingungen, die auf das maschinelle Bearbeitungswerkzeug übertragen werden, wodurch verhindert wird, dass unerwünschte Schwingungen zurück oder hinauf in das maschinelle Bearbeitungssystem gelangen;
**dadurch gekennzeichnet, dass** die Vorrichtung (810) ferner Folgendes umfasst:
(a) einen konischen Ausrichtungshöcker (843), der im Wandler (870) in der Knotenposition (851) desselben ausgebildet ist;
(b) einen konischen Flansch (841), der im Gehäuse (840) ausgebildet ist, wobei der konische Flansch (841) innerhalb seiner elastischen Grenzen über den konischen Ausrichtungshöcker (843) gedehnt ist, wodurch das Gehäuse (840) gegen eine auf dem Wandler (870) ausgebildete horizontale Basis (847) abgedichtet wird; und
(c) eine Rille (854), die in der horizontalen Basis (847) auf dem Wandler (470) ausgebildet ist, um einen O-Ring aufzunehmen, wobei der O-Ring zusätzliche Abdichtungseigenschaften für die Vorrichtung (810) bereitstellt.

2. Vorrichtung (810) nach Anspruch 1, ferner umfassend eine Werkzeughalterung (820), wobei die Werkzeughalterung (820) und der obere Abschnitt des Gehäuses (840) mechanisch miteinander gekoppelt oder einstückig ausgebildet sind.

3. Vorrichtung nach einem der Ansprüche 1 oder 2, wobei die Ultraschallwandleranordnung (870) ferner Folgendes umfasst: eine vordere Masse (876); eine hintere Masse; eine Vielzahl von piezoelektrischen Keramikelementen, die zwischen der vorderen Masse und der hinteren Masse angeordnet sind; zumindest eine Elektrizitätsquelle, die mit den piezoelektrischen Keramikelementen verbunden ist; und ein Kompressionselement, das durch die vordere Masse, die hintere Masse und die Keramikelemente hindurchverläuft, wobei das Kompressionselement wirksam ist, um eine Kompressionskraft auf die Keramikelemente zu beaufschlagen.

4. Vorrichtung nach einem der Ansprüche 1 oder 2, wobei die Ultraschallwandleranordnung (870) ferner eine modifizierte Spannzange umfasst, die geeignet ist, um das maschinelle Bearbeitungswerkzeug aufzunehmen.

5. Vorrichtung nach einem der Ansprüche 1 oder 2, wobei die Ultraschallwandleranordnung (870) ferner zumindest einen elektrischen Verbinder umfasst.

6. Vorrichtung nach einem der Ansprüche 1 oder 2, wobei die Umfangsregion (852) dreieckige geometrische Reliefs umfasst, die im Gehäuse an einer oder mehreren vorbestimmten Stellen ausgebildet sind.

## Revendications

1. Dispositif (810) à utiliser dans un système d'usinage, comprenant :
(a) un ensemble transducteur à ultrasons (870) présentant une position nodale connue (851),
dans lequel l'ensemble transducteur ultrasonore (870) est adapté pour recevoir un outil d'usinage, et
(b) un boîtier d'isolation des vibrations (840) adapté pour être à la fois compatible avec un système d'usinage et pour recevoir l'ensemble transducteur ultrasonore (870) à l'intérieur, dans lequel le boîtier (840) comprend en outre une région circonférentielle (852) avec une section profilée et amincie à partir de laquelle le boîtier (840) est formé pour isoler toutes les vibrations générées par l'ensemble transducteur ultrasonore (870) lorsque le dispositif (810) est en fonctionnement, à l'exception des vibrations axiales transmises à l'outil d'usinage, empêchant ainsi les vibrations indésirables de se déplacer vers l'arrière ou vers le haut dans le système d'usinage ;
**caractérisé en ce que** le dispositif (810) inclut en outre :
(a) un bossage d'alignement conique (843) formé dans le transducteur (870) au niveau de sa position nodale (851) ;
(b) une bride conique (841) formée dans le boîtier (840), dans lequel la bride conique (841) est étirée dans ses limites élastiques sur le bossage d'alignement conique (843), scellant ainsi le boîtier (840) contre une base horizontale (847) formée sur le transducteur (870) ; et
(c) une rainure (854) formée dans la base horizontale (847) sur le transducteur (470) pour recevoir un joint torique, dans lequel le joint torique fournit des propriétés d'étanchéité supplémentaires au dispositif (810).

2. Dispositif (810) selon la revendication 1, comprenant en outre un porte-outil (820), dans lequel le porte-outil (820) et la partie supérieure du boîtier (840) sont couplés mécaniquement l'un à l'autre ou sont intégrés l'un à l'autre.

3. Dispositif selon l'une quelconque des revendications 1 ou 2, dans lequel l'ensemble transducteur à ultrasons (870) comprend en outre : une masse avant (876) ; une masse arrière ; une pluralité de céramiques piézoélectriques positionnées entre la masse avant et la masse arrière ; au moins une source d'électricité connectée aux céramiques piézoélectriques ; et un élément de compression passant à travers la masse avant, la masse arrière et les céramiques, dans lequel l'élément de compression est opérationnel pour appliquer une force de compression aux céramiques.

4. Dispositif selon l'une quelconque des revendications 1 ou 2, dans lequel l'ensemble transducteur ultrasonore (870) inclut en outre une pince de serrage modifiée adaptée pour recevoir l'outil d'usinage.

5. Dispositif selon l'une quelconque des revendications 1 ou 2, dans lequel l'ensemble transducteur ultrasonore (870) inclut en outre au moins un connecteur électrique.

6. Dispositif selon l'une quelconque des revendications 1 ou 2, dans lequel la région circonférentielle (852) inclut des reliefs géométriques triangulaires formés dans le boîtier à un ou plusieurs emplacements prédéterminés.
